# FASCICULE DE BREVET EUROPEEN

(11) **EP 1 640 501 B1**
(45) Date de publication et mention de la délivrance du brevet: **21.05.2008**
(21) Numéro de dépôt: 05292010.5
(22) Date de dépôt: 27.09.2005
(51) Int. Cl.: E01C 19/20, A01C 15/16

(54) **Dispositif d'épandage de matiere granuleuse ou pulvérulente**
Streuvorrichtung für körniges oder pulverförmiges Material
Spreading device for granular or powder material

(30) Priorité: 27.09.2004 FR 0410230
(43) Date de publication de la demande: 29.03.2006
(73) Titulaire: Gendre Fabrication Industrielle SARL, 81 400 Blaye Les Mines (FR)
(72) Inventeur: Villeneuve, Jean c/o Novograaf Technologies, 57070 Metz (FR); Lacz, Alexandre c/o Novagraaf Technologies, 57070 Metz (FR)
(74) Mandataire: Brungard, Yves Francois

(56) Documents cités:
- FR-A- 718 646
- US-A- 3 774 814

## Description

La présente invention concerne un dispositif d'épandage de matière granuleuse ou pulvérulente, en particulier de la chaux ou du ciment. Destiné notamment à une utilisation dans le domaine des travaux publics, ce dispositif peut être utilisé en particulier pour le traitement du soubassement des routes.

Le dispositif d'épandage est typiquement fixé sur un châssis de camion qui comporte un caisson de stockage du produit à épandre. Le dispositif d'épandage constitue un système de dosage par rouleau volumétrique, placé à l'arrière du caisson, transversalement au sens de déplacement du véhicule. Un tapis transporteur placé au fond du caisson amène le produit à épandre vers le rouleau et une double vis à pas inversé située au-dessus de celui-ci, dans une trémie de répartition, répartit le produit sur la longueur du rouleau.

Le dispositif comporte un rouleau alvéolaire s'étendant sensiblement horizontalement au fond de la trémie et entraîné en rotation, et un corps fixe à paroi partiellement cylindrique, qui sera par la suite appelé cylindre, situé à l'intérieur du rouleau alvéolaire. Le rouleau alvéolaire a une section, perpendiculaire à l'axe, de forme générale annulaire. Il comporte une pluralité de parois s'étendant selon la longueur du rouleau et radialement, ces parois constituant des sortes d'ailettes réparties circonférentiellement, et au moins deux parois transversales annulaires, qui définissent avec les dites ailettes des alvéoles débouchant vers l'extérieur et aussi vers l'intérieur du rouleau. Plusieurs parois annulaires peuvent être réparties le long du rouleau, pour délimiter plusieurs alvéoles juxtaposées longitudinalement. Les ailettes et les parois annulaires s'étendent radialement sur une distance déterminant la profondeur des alvéoles, dont elles constituent les parois latérales. Dans les zones où la paroi du cylindre fixe est sensiblement en contact glissant avec le rouleau, cette paroi constitue un fond obturant les alvéoles du côté de l'axe du rouleau. Par ailleurs, la partie inférieure de la trémie comporte des parois incurvées conformées pour venir en contact sensiblement étanche avec la périphérie du rouleau, c'est à dire avec les bords externes des ailettes, de sorte que, lorsque le rouleau est immobile, il empêche l'écoulement du produit hors de la trémie.

En fonctionnement, la matière pulvérulente répartie dans la trémie tombe par gravité dans les alvéoles du rouleau qui sont situées, au fond de la trémie, au-dessus de la portion de paroi cylindrique du cylindre fixe, la matière étant alors retenue dans les dites alvéoles. En tournant, le rouleau entraîne la matière contenue dans chaque alvéole, les ailettes formant une sorte de racleur tournant en glissant entre la paroi du cylindre fixe et la paroi incurvée de la partie inférieure de la trémie.

Lorsque les alvéoles parviennent sous cette paroi incurvée, en particulier en position inférieure, la matière n'est plus confinée dans les alvéoles et peut s'en échapper et tomber par gravité sur le sol en étant répartie sensiblement uniformément le long du cylindre.

Mais il est courant que la matière introduite dans les alvéoles à partir de la trémie soit au moins un peu compressée, ou au moins s'agglutine et adhère à la surface des ailettes et des parois annulaires, et dans ce cas la matière ne tombe pas par gravité, ce qui perturbe l'épandage et conduit à un épandage irrégulier ou même à terme à une obstruction quasi totale des alvéoles, et une absence quasi totale d'épandage.

Des systèmes d'épandage ou dosage du type mentionné ci-dessus sont connus par exemple par les documents FR-718.646, ou US 3.774.814. Dans ces systèmes, des moyens sont prévus pour éviter que la matière introduite dans les alvéoles n'y reste coincée. Dans FR-718.646 par exemple, la paroi cylindrique fixe à l'intérieur du rouleau ne s'étend que sur une zone supérieure, et sur le reste de la circonférence, dans une zone inférieure, elle n'est plus en contact avec les ailettes et parois annulaires. Dans cette zone inférieure, en aval de la trémie par rapport au sens de rotation du rouleau et où le support fixe intérieur n'est plus en contact avec les alvéoles, il n'y a donc plus de fond aux alvéoles. Il y est prévu une sorte de peigne, placé à l'extérieur du rouleau et comportant des dents élastiques qui viennent pousser la matière vers l'intérieur du rouleau en pénétrant dans les alvéoles lorsqu'elles passent devant les extrémités des dents du peigne, de manière à chasser la matière hors des alvéoles, et éviter ainsi qu'elles se colmatent.

Dans une autre forme de réalisation, similaire au système de US 3.774.814, ce sont des bossages, formés sur un rouleau de débourrage placé à côté du cylindre et tournant simultanément avec lui en sens inverse, qui pénètrent dans les alvéoles pour pousser la matière.

Mais il s'est avéré que ces systèmes de débourrage ne sont pas totalement satisfaisant car la matière évacuée des alvéoles par les dents ou bossages à tendance à rester à l'intérieur du cylindre et donc à ne pas être correctement et régulièrement épandue.

La présente invention a pour but de résoudre ces problèmes, et vise particulièrement à fournir un système de débourrage efficace permettant d'assurer un épandage régulier lors de la rotation du rouleau à alvéole, au cours de son déplacement sur le sol à traiter. Elle vise aussi à permettre un épandage régulier et en quantité bien contrôlée dans la direction transversale, c'est à dire selon la longueur du rouleau, celui ci étant généralement placé transversalement sur le véhicule d'épandage portant le caisson de matière à épandre.

Avec ces objectifs en vue, l'invention a pour objet un dispositif d'épandage de matière granuleuse ou pulvérulente, comportant un rouleau alvéolaire obturant le fond d'une trémie et entraîné en rotation, un élément fixe comprenant une paroi partiellement cylindrique, placé à l'intérieur du rouleau alvéolaire au niveau du fond de la trémie pour obturer le fond des alvéoles situées face à la dite paroi partiellement cylindrique, et des moyens de débourrage des alvéoles.

Selon l'invention, le dispositif est caractérisé en ce que les dits moyens de débourrage comportent un rouleau nettoyeur disposé à l'intérieur du rouleau alvéolaire, d'axe parallèle à celui du rouleau alvéolaire, et comportant des lames radiales de dimensions adaptées pour que les bords radialement externes des dites lames s'engagent dans les alvéoles lorsque le rouleau alvéolaire est entraîné en rotation, de manière à pousser vers l'extérieur du rouleau la matière contenue dans les alvéoles.

Grâce à l'invention, l'épandage peut être réalisé de manière régulière et parfaitement contrôlée, le débourrage des alvéoles étant réalisé de manière simple et efficace.

En effet, dans les systèmes selon l'art antérieur décrits précédemment, du fait que la poussée des moyens de débourrage est exercée vers l'intérieur du rouleau, la matière ainsi évacuée des alvéoles se retrouve à l'intérieur du cylindre, et ne peut en ressortir que par les alvéoles libérées, ce qui nécessite que les morceaux de matière agglomérée se retrouvent dans une orientation adaptée, et dans des dimensions suffisamment petites, pour passer librement à nouveau à travers les alvéoles, de l'intérieur vers l'extérieur. L'invention évite ces problèmes par le fait que les lames radiales du rouleau nettoyeur poussent la matière directement vers l'extérieur du rouleau.

De plus, de par la configuration générale des ailettes des rouleaux alvéolaires, qui s'étendent sensiblement selon des plans radiaux, les ailettes formant les parois latérales des alvéoles sont plus rapprochées l'une de l'autre vers l'intérieur du rouleau. En poussant sur de la matière agglutinée dans les dites alvéoles vers l'intérieur, selon l'art antérieur, il peut se produire une compression complémentaire risquant d'aggraver le colmatage. Contrairement à cela, les lames du rouleau nettoyeur selon l'invention exercent une poussée radiale dans la direction où les ailettes s'écartent, favorisant ainsi une décompression de la matière et don le débourrage des alvéoles.

Selon une disposition préférentielle, le rouleau nettoyeur est entraîné en rotation par l'engrènement de ses lames avec les ailettes constituant les parois des alvéoles. Ainsi, il n'y a pas besoin d'organes d'entraînement particulier pour faire tourner le rouleau nettoyeur en synchronisme avec le rouleau alvéolaire.

Selon une autre disposition, le dispositif comporte, successivement selon la direction axiale du rouleau, une pluralité de compartiments correspondants chacun respectivement à un groupe d'alvéoles réparties circonférentiellement, délimité par des parois annulaires et s'étendant sur une longueur correspondant à la longueur axiale des compartiments, et chaque compartiment comportant une trappe de fermeture. Par cette disposition, on peut adapter la répartition de matière amenée sur le rouleau alvéolaire selon sa longueur, de matière à ajuster la répartition de matière épandue selon la direction transversale par rapport au déplacement du camion porteur, permettant ainsi notamment d'ajuster la largeur de l'épandage entre une largeur minimale correspondant à une seule trappe ouverte, jusqu'à une largeur maximale obtenue avec l'ouverture de toutes les trappes. Les trappes de fermeture de chaque compartiment sont préférentiellement des trappes coulissantes sensiblement horizontalement, commandées par des vérins, placées dans la trémie juste au-dessus du rouleau alvéolaire.

On notera incidemment que le partitionnement en compartiments de la trémie, et l'utilisation de ces trappes sert essentiellement à assurer la répartition voulue dans le sens transversal, et la largeur d'épandage. L'ouverture des trappes est généralement commandée en tout ou rien. Lorsqu'elles sont toutes fermées, elles assurent par ailleurs une étanchéité supplémentaire de la trémie, pour éviter que de la matière tombe au sol lors des déplacements du véhicule porteur.

Le débit de matière peut être par ailleurs ajusté en jouant sur la vitesse de rotation du rouleau alvéolaire et par exemple sur l'ouverture d'une trappe ajustable réglant l'ensemble du débit de matière, entre le caisson et la trémie.

Selon d'autres dispositions spécifiques :
- le rouleau nettoyeur est monté tournant sur des paliers solidaires de l'élément fixe à paroi partiellement cylindrique.
- l'élément fixe à paroi partiellement cylindrique est lié à un arbre longitudinal selon l'axe du rouleau alvéolaire, l'arbre longitudinal étant solidarisé par ses extrémités sur la trémie.
- le rouleau alvéolaire comporte des flasques d'extrémités rapportés montés tournants sur les extrémités de l'arbre longitudinal.
- les flasques d'extrémité du rouleau alvéolaire portent des roues dentées d'entraînement en rotation.
- le rouleau nettoyeur comporte quatre ensembles de lames radiales répartis à 90°.
- les ailettes du rouleau alvéolaire comportent des raidisseurs.

D'autres caractéristiques et avantages apparaîtront dans la description qui va être faite uniquement à titre d'exemple d'un dispositif d'épandage conforme à l'invention.

On se reportera aux dessins annexés dans lesquels :
- la figure 1 est une vue partielle d'un véhicule portant le dispositif d'épandage,
- la figure 2 est une vue en coupe transversale du dispositif,

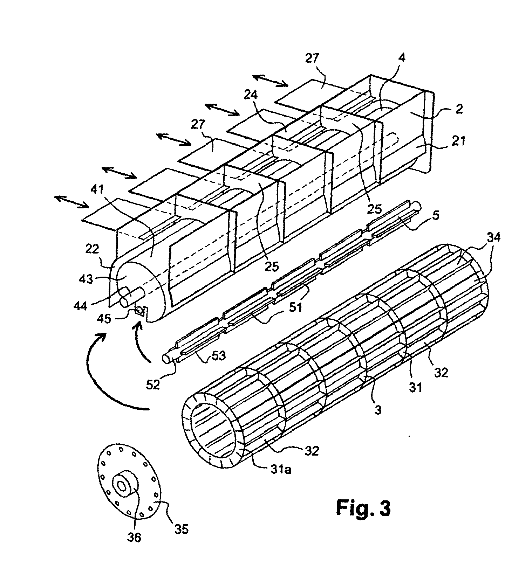

- la figure 3 est une vue simplifiée du dispositif en perspective et éclaté,
- la figure 4 est une vue partielle du dispositif en coupe axiale selon un plan horizontal, montrant l'entraînement en rotation du rouleau alvéolaire,
- la figure 5 est une vue similaire, mais en coupe selon un plan vertical.

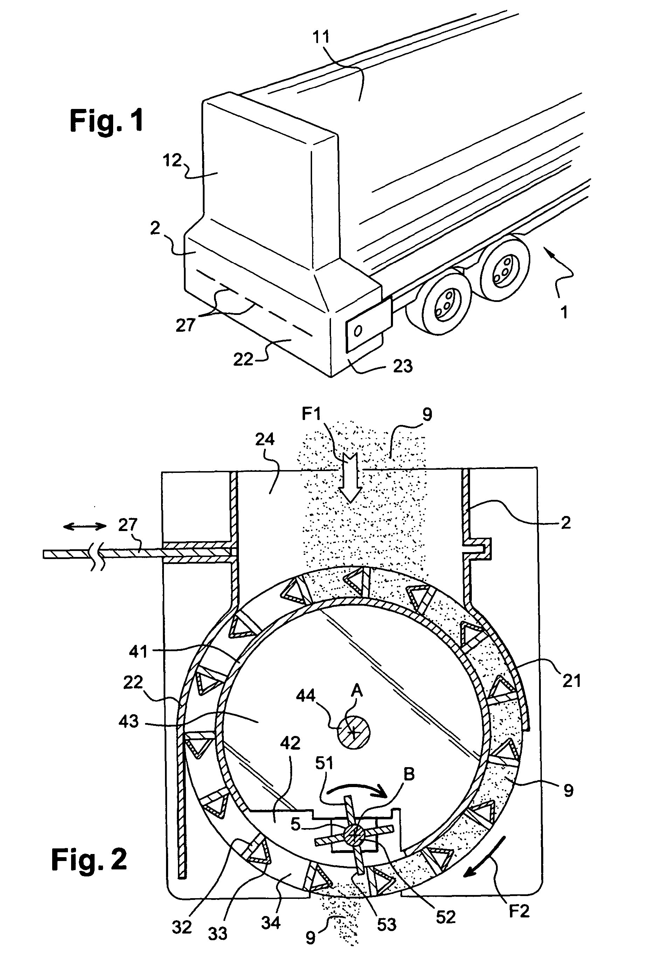

Sur le dessin de la figure 1, on voit l'arrière d'un camion 1 portant un caisson 11 sur lequel est monté, à l'arrière du camion, un dispositif d'épandage 12 qui comporte notamment une trémie 2 dans laquelle la matière à répandre est amenée, de manière connue en soi, à partir du caisson 11.

La trémie 2 comporte, à son extrémité inférieure, une portion de paroi incurvée avant 21 et une portion de paroi incurvée arrière 22. Entre ces parois 21, 22, et obturant la trémie 2, est disposé un ensemble d'épandage comportant un rouleau alvéolaire 3, un corps fixe 4 de forme générale sensiblement cylindrique, placé à l'intérieur du rouleau alvéolaire, et un rouleau nettoyeur 5 placé également à l'intérieur du rouleau alvéolaire.

La trémie 2 est séparée en plusieurs compartiments 24, cinq dans l'exemple représenté, séparés par des parois verticales 25 qui s'étendent jusqu'au rouleau alvéolaire, leurs bords inférieurs étant courbes pour épouser la forme du dit rouleau. Dans chaque compartiment de la trémie, une trappe 27, coulissant horizontalement juste au-dessus du rouleau et actionnée par un vérin, non représenté, permet d'obturer plus ou moins le dit compartiment.

Le rouleau alvéolaire 3 comporte plusieurs parois annulaires 31, distantes axialement par exemple d'environ 50 cm, reliées par des ailettes 32 réparties circonférentiellement et pourvues, comme on le voit figure 2, de raidisseurs 33. Les ailettes 32 forment avec les parois annulaires 31 des alvéoles 34, destinées à contenir et transporter la matière pulvérulente 9 à épandre, comme on le verra par la suite. La dimension radiale des ailettes est égale à celle des parois annulaires et définit la profondeur des alvéoles 34. Les ailettes situées entre deux parois annulaires adjacentes forment un ensemble d'ailettes correspondant à un compartiment 24 de la trémie. Dans l'exemple présenté il y a donc cinq tels ensembles d'ailettes Les parois verticales 25 de celle-ci sont à l'aplomb des parois annulaires 31 du rouleau alvéolaire, et forment ainsi une certaine étanchéité entre compartiments 24 de la trémie et ensembles d'ailettes du rouleau.

Le corps fixe 4 à une paroi latérale cylindrique 41, de diamètre égal au diamètre intérieur du rouleau alvéolaire 3, de manière que ce dernier puisse tourner autour du corps fixe, les ailettes glissant, avec un jeu fonctionnel minimal, sur la surface de la dite paroi 41. La paroi latérale 41 est interrompue dans une zone inférieure, de sorte que, dans cette zone, subsiste un dégagement 42 où il n'y a pas de paroi contre le rouleau alvéolaire. Le corps fixe 4 comporte par ailleurs deux flasques d'extrémités 43, reliés par soudure à la paroi 41 et à un arbre axial 44 dont les extrémités sont maintenues rigidement sur des parois latérales 23 de la trémie 2.

L'axe du corps fixe 41 et le centre de courbure des parois avant 21 et arrière 22 de la trémie sont confondus et la distance entre la paroi 41 du corps fixe et les dites parois 21 et 22 est sensiblement égale à la dimension radiale des ailettes 32, de sorte que le rouleau alvéolaire s'adapte juste, avec un jeu minimal prescrit, entre le corps fixe et la trémie, pour obturer celle-ci, comme on le voit bien figure 2.

Des flasques d'entraînement 35 sont fixés sur les parois annulaires d'extrémité 31a du rouleau alvéolaire et portent chacun un palier 36 à roulement 37 monté sur l'arbre fixe axial 44. L'entraînement en rotation du rouleau alvéolaire est assuré par un moteur, par exemple un moteur hydraulique, non représenté, fixé sur la trémie 2, qui entraîne un arbre moteur 61 s'étendant d'un côté à l'autre de la trémie. Cet arbre moteur 61 entraîne à son tour, par des pignons 62 et chaînes 63, des roues dentées 64 montées sur les paliers 36, pour entraîner les flasques 35 et le rouleau alvéolaire en rotation.

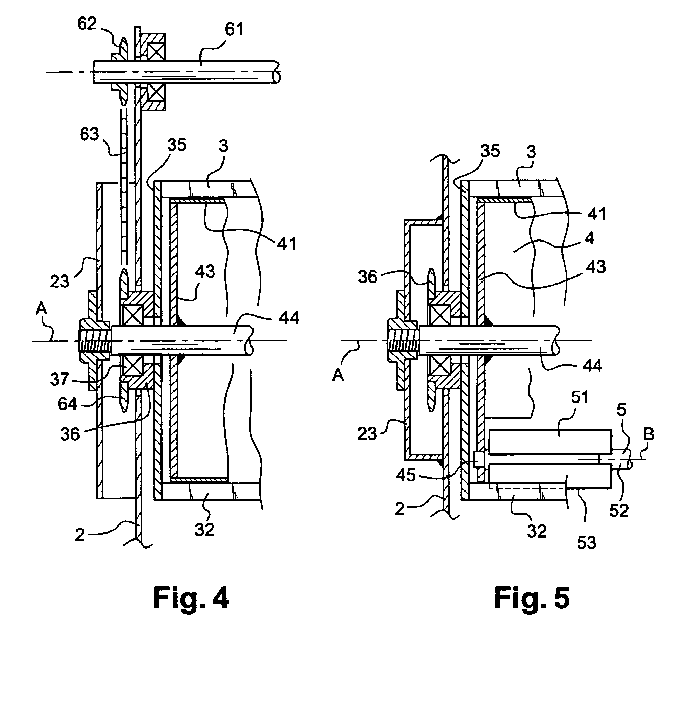

Le rouleau nettoyeur 5 comporte une pluralité de lames 51 s'étendant radialement à partir d'un arbre 52, d'axe B parallèle à l'axe A du rouleau alvéolaire, dont les extrémités sont montées tournant librement dans des paliers 45 formés sur les flasques d'extrémités fixes 43 du corps cylindrique 4, dans la zone de dégagement 42. Tout comme les ailettes 32, les lames 51 sont disposées en cinq groupes répartis axialement, chaque groupe comportant ici quatre lames, donc disposées respectivement à 90°. Chaque groupe de lames correspond à un groupe d'ailettes 32 et à un compartiment 24 de la trémie. La dimension radiale de ces lames 51, et le positionnement de l'axe B du rouleau nettoyeur par rapport au rouleau alvéolaire sont tels que les bords extérieurs 53 des dites lames s'engagent dans les alvéoles 34, entre les ailettes 32, comme on le voit bien figures 2 et 5. Ainsi, comme on le voit bien figure 2, lorsque le rouleau alvéolaire 3 tourne, une ailette 32 vient pousser une lame 51, entraînant ainsi la rotation du rouleau nettoyeur, comme représenté par les flèches de la figure 2.

On notera aussi que le nombre et les dimensions des lames et des ailettes, et le positionnement relatif du rouleau nettoyeur par rapport au rouleau alvéolaire, sont aussi déterminés de manière qu'il n'y ait pas de blocage par interférence entre les ailettes et les lames, les unes devant entraîner les autres comme les dents dans un système d'engrenage.

Le fonctionnement du dispositif va maintenant être expliqué en relation avec la figure 2. La matière pulvérulente est amenée et répartie dans les compartiments de la trémie 2 au-dessus du rouleau alvéolaire, par une vis à pas inversée, non représentée, située dans la trémie au-dessus des trappes 27. La répartition de matière sur la longueur du rouleau peut être adaptée en jouant sur l'ouverture des trappes 27. Dans les compartiments dont la trappe est ouverte, la matière tombe, selon la flèche F1, sur le rouleau alvéolaire 3 et pénètre dans les alvéoles 34 où elle est maintenue par la paroi 41 du corps cylindrique fixe 4. Le rouleau alvéolaire 3 étant entraîné en rotation selon la flèche F2, les ailettes entraînent la matière contenue dans les alvéoles en la faisant passer entre la paroi 41 du corps fixe et la paroi avant 21 de la trémie. Lorsque la matière contenue dans une alvéole parvient en dessous du bord inférieur de la dite paroi 21, elle se trouve libérée et une partie au moins peut donc choir sur le sol. Mais si la matière pulvérulente se trouve amalgamée dans l'alvéole ou reste adhérente aux ailettes 32 ou aux parois annulaires 31, cette matière poursuit son mouvement avec la rotation du rouleau alvéolaire 3, comme on l'a représenté sur la partie droite de la figure 2. Arrivée au niveau inférieur, la paroi 41 n'est plus présente pour obturer le fond des alvéoles. Les lames 51 du rouleau nettoyeur, entraîné en rotation comme décrit précédemment, s'engagent dans les alvéoles 34 et poussent vers l'extérieur, et vers le bas, la matière encore présente, la forçant à se désagglomérer et à se décoller des parois du rouleau alvéolaire sur lesquelles elle était maintenue. Il en résulte un nettoyage efficace des alvéoles, et cela d'autant plus que, du fait que le rouleau nettoyeur est entraîné par le rouleau alvéolaire, le bord externe des lames vient racler contre la face des ailettes qui les entraînent, en poussant la matière adhérente vers l'extérieur.

L'invention n'est pas limitée au mode de réalisation qui vient d'être décrit uniquement à titre d'exemple. En particulier, le nombre d'ailettes et de lames, tout comme le nombre d'ensembles d'ailettes ou de lames et de compartiments, et leurs répartitions tant axiales que circonférentielles, pourront être modifiés et adaptés en fonction des besoins. L'entraînement du rouleau nettoyeur pourrait aussi être réalisé de manière différente, ou au moins assisté par un moteur annexe.

## Revendications

1. Dispositif d'épandage de matière (9) granuleuse ou pulvérulente, comportant un rouleau alvéolaire (3) obturant le fond d'une trémie (2) et entraîné en rotation, un élément fixe (4) comprenant une paroi (41) partiellement cylindrique, placé à l'intérieur du rouleau alvéolaire au niveau du fond de la trémie pour obturer le fond des alvéoles (34) situées face à la dite paroi partiellement cylindrique, et des moyens de débourrage des alvéoles,
**caractérisé en ce que** les dits moyens de débourrage comportent un rouleau nettoyeur (5) disposé à l'intérieur du rouleau alvéolaire (3), d'axe (B) parallèle à celui (A) du rouleau alvéolaire, et comportant des lames (51) radiales de dimensions adaptées pour que les bords (53) radialement externes des dites lames s'engagent dans les alvéoles (34) lorsque le rouleau alvéolaire (3) est entraîné en rotation, de manière à pousser vers l'extérieur du rouleau la matière (9) contenue dans les alvéoles (34).

2. Dispositif d'épandage selon la revendication 1, **caractérisé en ce que** le rouleau nettoyeur (5) est entraîné en rotation par l'engrènement de ses lames (51) avec des ailettes (32) constituant les parois des alvéoles (34).

3. Dispositif d'épandage selon la revendication 1, **caractérisé en ce que** la trémie comporte, selon la direction axiale du rouleau (3), une pluralité de compartiments (24) correspondants chacun respectivement à un groupe d'alvéoles (34) réparties circonférentiellement, délimité par des parois annulaires (31) et s'étendant sur une longueur correspondant à la longueur axiale des compartiments, et chaque compartiment (24) comportant une trappe de fermeture (27).

4. Dispositif d'épandage selon la revendication 1, **caractérisé en ce que** le rouleau nettoyeur (5) est monté tournant sur des paliers (45) solidaires de l'élément fixe à paroi partiellement cylindrique (4).

5. Dispositif d'épandage selon la revendication 1, **caractérisé en ce que** l'élément fixe à paroi partiellement cylindrique (4) est lié à un arbre longitudinal (44) selon l'axe (A) du rouleau alvéolaire (3), l'arbre longitudinal étant solidarisé par ses extrémités sur la trémie (2).

6. Dispositif d'épandage selon la revendication 5, **caractérisé en ce que** rouleau alvéolaire (3) comporte des flasques d'extrémités (35) rapportés montés tournants sur les extrémités de l'arbre longitudinal (44).

7. Dispositif d'épandage selon la revendication 6, **caractérisé en ce que** les flasques d'extrémités (35) du rouleau alvéolaire portent des roues dentées (64) d'entraînement en rotation.

8. Dispositif d'épandage selon la revendication 1, **caractérisé en ce que** le rouleau nettoyeur (5) comporte plusieurs ensembles de quatre lames radiales (51) réparties à 90°.

9. Dispositif d'épandage selon la revendication 2, **caractérisé en ce que** les ailettes (32) du rouleau alvéolaire comportent des raidisseurs (33).

## Claims

1. Device for spreading granular or pulverulent material (9), comprising a cellular roller (3) which closes off the base of a hopper (2) and is driven in rotation, a stationary element (4) comprising a partially cylindrical wall (41), said stationary element being placed inside the cellular roller at the base of the hopper in order to close off the bottom of the cells (34) located opposite said partially cylindrical wall, and means for emptying the cells,
**characterised in that** said emptying means comprise a cleaning roller (5) which is arranged inside the cellular roller (3) and has an axis (B) parallel to that (A) of the cellular roller, and comprising radial blades (51) of suitable dimensions so that the radially outer edges (53) of said blades engage in the cells (34) when the cellular roller (3) is driven in rotation, so as to push out of the roller the material (9) contained in the cells (34).

2. Spreading device according to claim 1, **characterised in that** the cleaning roller (5) is driven in rotation by the meshing of its blades (51) with vanes (32) forming the walls of the cells (34).

3. Spreading device according to claim 1, **characterised in that** the hopper comprises, in the axial direction of the roller (3), a plurality of compartments (24) which each correspond respectively to a group of cells (34) distributed circumferentially, said group of cells being delimited by annular walls (31) and extending over a length corresponding to the axial length of the compartments, and each compartment (24) comprising a closure hatch (27).

4. Spreading device according to claim 1, **characterised in that** the cleaning roller (5) is mounted in a rotatable manner on bearings (45) secured to the stationary element comprising a partially cylindrical wall (4).

5. Spreading device according to claim 1, **characterised in that** the stationary element comprising a partially cylindrical wall (4) is connected to a longitudinal shaft (44) along the axis (A) of the cellular roller (3), the longitudinal shaft being secured at its ends to the hopper (2).

6. Spreading device according to claim 5, **characterised in that** the cellular roller (3) comprises attached end plates (35) which are mounted in a rotatable manner on the ends of the longitudinal shaft (44).

7. Spreading device according to claim 6, **characterised in that** the end plates (35) of the cellular roller carry toothed wheels (64) for driving it in rotation.

8. Spreading device according to claim 1, **characterised in that** the cleaning roller (5) comprises several sets of four radial blades (51) spaced apart by 90°.

9. Spreading device according to claim 2, **characterised in that** the vanes (32) of the cellular roller comprise stiffeners (33).

## Patentansprüche

1. Vorrichtung zum Streuen körnigen oder pulverförmigen Materials (9), eine zellige Walze (3) umfassend, die den Boden eines Trichters (2) verschließt und in Drehung versetzt wird, ein feststehendes Teil (4), das eine teilweise zylindrische Wand (41) umfasst, die im Inneren der zelligen Walze in Höhe des Bodens des Trichters angeordnet ist, um den Boden der Zellen (34) zu verschließen, die der genannten teilweise zylindrischen Wand gegenüber angeordnet sind, und Mittel zum Befreien der Zellen,
**dadurch gekennzeichnet, dass** die genannten Befreiungsmittel eine Reinigungswalze (5) aufweisen, die im Inneren der zelligen Walze (3) angeordnet ist, mit einer zu der Achse (A) der zelligen Walze parallelen Achse (B) und radiale Klingen (51) aufweisend, deren Abmessungen dafür angepasst sind, dass die in radialer Richtung äußeren Ränder (53) der genannten Klingen In die Zellen (34) eingreifen, wenn die zellige Walze (3) in Rotation versetzt wird, derart, dass sie das in den Zellen (34) enthaltene Material (9) aus der Walze hinaus schieben.

2. Streuvorrichtung nach Patentanspruch 1, **dadurch gekennzeichnet, dass** die Reinigungswalze (5) durch das Eingreifen ihrer Klingen (51) in Schaufeln (32) in Drehung versetzt wird, die die Wände der Zellen (34) bilden.

3. Streuvorrichtung nach Patentanspruch 1, **dadurch gekennzeichnet, dass** der Trichter in Richtung der Achse der Walze (3) eine Vielzahl von Abteilungen (24) aufweist, die jeweils einer Gruppe in Umfangsrichtung angeordneter Zellen (34) entsprechen, die durch ringförmige Wände (31) begrenzt sind und sich über eine Länge erstrecken, die der Länge in Achsenrichtung der Abteilungen entspricht, wobei jede Abteilung (24) eine Verschlussklappe (27) aufweist.

4. Streuvorrichtung nach Patentanspruch 1, **dadurch gekennzeichnet, dass** die Reinigungswalze (5) auf Lagern (45) drehbar montiert ist, die mit dem feststehenden Teil mit teilweise zylindrischer Wand (4) fest verbunden sind.

5. Streuvorrichtung nach Patentanspruch 1, **dadurch gekennzeichnet, dass** das feststehende Teil mit teilweise zylindrischer Wand (4) mit einer Längswelle (44) in Richtung der Achse (A) der zelligen Walze (3) verbunden ist, wobei die Längswelle an ihren Enden mit dem Trichter (2) fest verbunden ist.

6. Streuvorrichtung nach Patentanspruch 5, **dadurch gekennzeichnet, dass** die zellige Walze (3) angesetzte Endflansche (35) aufweist, die an den Enden der Längswelle (44) drehbar montiert sind.

7. Streuvorrichtung nach Patentanspruch 6, **dadurch gekennzeichnet, dass** die Endflansche (35) der zelligen Walze Zahnräder (64) tragen, um in Drehung versetzt zu werden.

8. Streuvorrichtung nach Patentanspruch 1, **dadurch gekennzeichnet, dass** die Reinigungswalze (5) mehrere Einheiten aus vier radialen Klingen (51) aufweist, die um 90° angeordnet sind.

9. Streuvorrichtung nach Patentanspruch 2, **dadurch gekennzeichnet, dass** die Schaufeln (32) der zelligen Walze Aussteifungen (33) aufweisen.
